# EUROPÄISCHE PATENTSCHRIFT

(11) **EP 1 926 626 B1**
(45) Veröffentlichungstag und Bekanntmachung des Hinweises auf die Patenterteilung: **27.02.2019**
(21) Anmeldenummer: 06806760.2
(22) Anmeldetag: 08.09.2006
(51) Int. Cl.: F01N 3/20, B60K 13/04, B60K 15/03

(54) **TANKANORDNUNG FÜR EIN FLÜSSIGES REDUKTIONSMITTEL, INSBESONDERE FÜR EINE HARNSTOFFLÖSUNG**
VEHICLE TANK FOR A LIQUID REDUCING AGENT, IN PARTICULAR AN UREA SOLUTION
RESERVOIR DE VEHICULE POUR UN AGENT DE REDUCTION LIQUIDE, NOTAMMENT UNE SOLUTION D'UREE

(30) Priorität: 12.09.2005 DE 102005043565; 14.06.2006 DE 102006027487
(43) Veröffentlichungstag der Anmeldung: 04.06.2008
(73) Patentinhaber: ROBERT BOSCH GMBH, 70442 Stuttgart (DE)
(72) Erfinder: HAEBERER, Rainer, 75015 Bretten (DE); HORN, Matthias, 71691 Freiberg (DE); WALLIS, Christoph, A-5411 Oberalm (AT)
(86) Internationale Anmeldenummer: PCT/EP2006/066155
(87) Internationale Veröffentlichungsnummer: WO 2007/031467

(56) Entgegenhaltungen:
- EP-A1- 1 388 648
- EP-A2- 1 498 330
- WO-A-98/43732
- WO-A-03/016687
- WO-A-2005/045209
- WO-A2-01/39949
- DE-A1- 4 201 708
- DE-A1- 10 214 556
- DE-A1- 10 303 596
- US-A- 4 090 668
- US-A- 6 063 350
- US-A1- 2003 124 282
- US-B1- 6 338 420

## Beschreibung

### Stand der Technik

Bei mit Dieselkraftstoff betriebenen Fahrzeugen muss aufgrund der in den nächsten Jahren anstehenden verschärften Abgasgesetzgebung unter anderem der Schadstoff NOx erheblich reduziert werden. Eine Methode, die zur Anwendung kommt, ist das SCR-Verfahren (selective catalytic reduction), bei dem der Schadstoff NOx (Stickoxide) unter Zuhilfenahme von wässriger Harnstofflösung zu N₂ und H₂0 reduziert werden. Dazu wird die wässrige Harnstofflösung vor dem SCR-Katalysator in das Abgasrohr über ein Dosierventil eingespritzt. Die wässrige Harnstofflösung verdampft im heißen Abgas und bildet Ammoniak, das sich im SCR-Katalysator einlagert. Das im Katalysator eingelagerte Ammoniak wandelt die im Abgas enthaltenen Stickoxide in elementaren Stickstoff und Wasserdampf um. Die wässrige Harnstofflösung wird in einem Tank bevorratet. Dieses Reduktionsmittel stellt besondere Anforderungen an den Tank. Bei Nutzkraftwagen ist das SCR-Verfahren bereits in Serie. Dabei werden Tanks aus Edelstahl oder Aluminium eingesetzt, die über das Kühlwasser des Motors beheizt werden.

Aus der DE 420 1708 ist es bekannt, Kraftstoffbehälter aus Kunststoff herzustellen und innerhalb des Behälters ein Beruhigungsgefäß vorzusehen.

US 4 090 668 beschreibt einen Tank, der Teil einer Scheibenwasch- und Enteisungseinrichtung für Kraftfahrzeuge ist. Innerhalb des Tanks ist ein beheizbares Reservoir vorhanden aus dem die vorgewärmte Flüssigkeit entnommen und auf die auf die zu enteisenden Scheiben gesprüht wird. Die Beheizung erfolgt wahlweise durch das Kühlwasser oder eine zusätzliche elektrische Widerstandsheizung.

Aus der EP 1 498 330 A2 ist eine Scheibenenteisungseinrichtung für Kraftfahrzeuge bekannt bei der die Enteisungsflüssigkeit aus einem Tank entnommen und in einen außerhalb des Tanks befindlichen beheizbaren Behälter gefördert wird. Der beheizbare Behälter ist doppelwandig und umfasst eine elektrische Heizung.

Aus der EP 1 388 648 A1 ist ein Harnstofftank bekannt, der in einem Kraftstofftank angeordnet ist. In den Kraftstofftank strömt während des Betriebs der Brennkraftmaschine Kraftstoff von dem Einspritzsystem zurück. Dieser rückströmende Kraftstoff führt Wärme aus dem Einspritzsystem ab und erwärmt dadurch den in dem Kraftstofftank befindlichen Kraftstoff. Mittelbar wird dadurch auch die im Harnstofftank befindliche Flüssigkeit erwärmt.

Aus der US 6 063 350 ist ein Harnstofftank bekannt, bei dem die wichtigsten Komponenten in einem Modul zusammengefasst sind. Das Modul umfasst Sensoren für Qualität, Temperatur und Druck der in dem Harnstofftank befindlichen Flüssigkeit und deren Flüssigkeitsspiegel. Außerdem umfasst das Modul eine Pumpe und eine elektrische Heizung.

Aus der DE 102 14 556 A1 ist ein Kraftstoff- und Reduktionsmittelbetankungssystem bekannt. Dieses System ermöglicht das Befüllen sowohl des Kraftstofftanks als auch des Harnstofftanks.

### Offenbarung der Erfindung

Die Erfindung wird durch eine Tankanordnung mit den Merkmalen von Anspruch 1 definiert.

Eine Ausführung eines Tanks aus Aluminium oder Edelstahl ist teuer und begrenzt überdies die Formgebung. Aus diesem Grunde wird ein Kunststofftank mit verschiedenen konstruktiven Details vorgeschlagen. Dieser Kunststofftank kann besonders kostengünstig im Blasverfahren hergestellt werden.

Weitere Vorteile ergeben sich durch die in den abhängigen Ansprüchen und in der Beschreibung genannten Merkmale.

### Kurze Beschreibung der Zeichnungen

Figur 1a zeigt eine Tankwand 2 eines Reduktionsmitteltanks,
Figur lb einen Reduktionsmitteltank mit Inhalt,
Figur 2 einen Reduktionsmitteltank mit Isolationsschicht,
Figur 3 einen Reduktionsmitteltank mit Heizstab,
Figur 4 einen Reduktionsmitteltank mit eingebautem Topf,
Figur 5 einen Reduktionsmitteltank mit einer Leitung,
Figur 6 einen Reduktionsmitteltank mit einer Leitung und einer Topfleitung,
Figur 7 einen Reduktionsmitteltank mit mit Drosseln versehenen Leitungen,
Figur 8 einen flächigen Aluminiumkörper,
Figur 9 einen Reduktionsmitteltank mit Topf und Heizung,
Figur 10 einen Topf eines Reduktionsmitteltanks,
Figur 11 eine Heizung,
Figur 12 einen Reduktionsmitteltank mit Topf und Behälter,
Figur 13 ein Fördermodul und
Figur 14 eine schematische Darstellung eines Tanks mit Lüftungselementen.

### Ausführungsformen der Erfindung

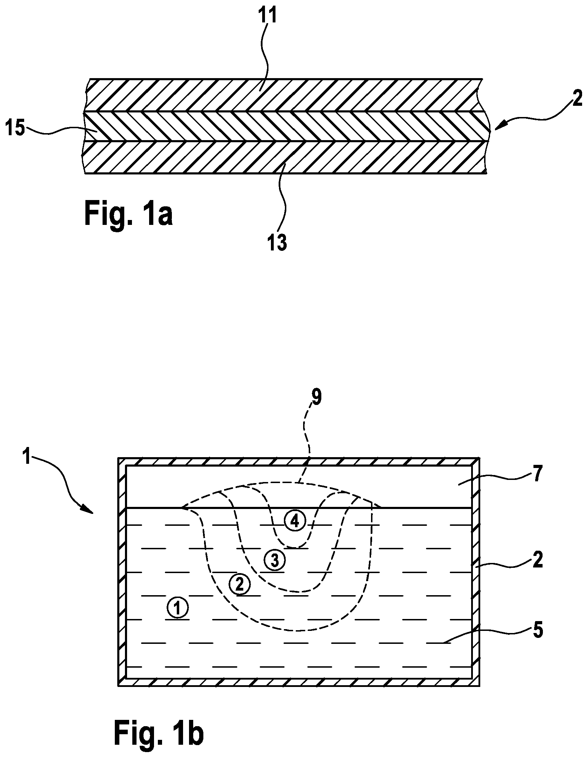

In der Beschreibung und in den Figuren sind auch Ausführungsformen angegeben, die in den Ansprüchen nicht erfasst sind. Hierbei handelt es sich nicht um Ausführungsformen der Erfindung, sondern um Aspekte, die das Verständnis der Erfindung erleichtern. Figur 1 zeigt in schematischer Ansicht (ohne Darstellung einer Tanköffnung zur Befüllung bzw. ohne Darstellung eines Anschluss an eine Abgasnachbehandlungsanordnung) in Teilfigur b einen Tank 1 mit einer Tankwand 2. Der Tank wird aus Kunststoff, z.B. PE (Polyethylen), PA (Polyamid), PAA (Polyarylamid) gefertigt. Beim Reduktionsmittel "wässrige Harnstofflösung" muß die Diffusion von Ammoniak durch die Behälterwand nach außen vermieden werden. Dies kann entweder durch eine entsprechend große Wandstärke oder einen sogenannten Coex-Werkstoff sichergestellt werden. Beim Coex-Werkstoff besteht die Behälterwand aus mehreren verschiedenen Werkstoffschichten, wobei z.B. eine Schicht eine Sperrschicht darstellen kann. Coex-Werkstoffe werden üblicherweise mittels einer Koextrusion eines Mehrschichtverbundes hergestellt. Figur 1a zeigt den Aufbau der Tankwand 2 in Form einer Coex-Schicht aus drei Teilschichten, einer inneren, der Tankfüllung zugewandten Schicht 11, einer äußeren Schicht 13 und einer zwischen der inneren und der äußeren Schicht angeordneten Sperrschicht 15. Die wässrige Harnstofflösung 5 gefriert unterhalb -11° C. Oberhalb des Flüssigkeitspegels ist ein Luftpolster vorhanden. Umgibt diesen Tank eine Temperatur kleiner als -11°C, so gefriert der Tank zunächst im boden- und wandnahen Bereich. Da das Luftpolster 7 oberhalb der Flüssigkeit als Isolation dient, gefriert, die Flüssigkeit an der Oberfläche erst am Ende. Das Luftpolster oberhalb der Flüssigkeit dient somit als Ausgleichsvolumen für die gefrierende wässrige Harnstofflösung. Durch das gezielte Einfrieren vom Boden und von der Wand kann es somit nicht zu einem Bersten des Tanks kommen, da der Volumenzuwachs gezielt in den luftgefüllten Bereich des Tanks geleitet wird. In Figur 1b markieren die eingekreisten Ziffern 1 bis 4 die Reihenfolge der Bereiche, in denen die Tankfüllung bei Unterschreiten einer Temperatur von -11 Grad Celsius einfriert. Dadurch entsteht ein Hügel 9 in der Tankmitte im Bereich des Luftpolsters 7.

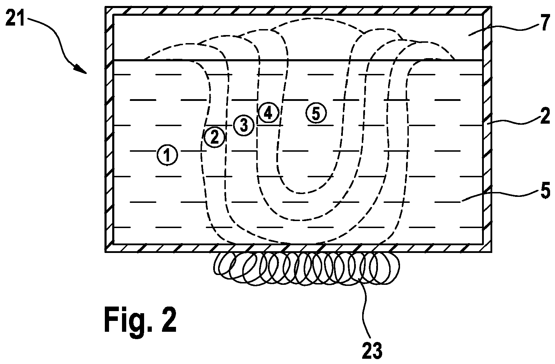

Figur 2 zeigt einen Tank 21 mit einer Tankwand 2 aus Kunststoff und einer zusätzlichen Isolation 23, beispielsweise in Form einer auf dem Tankboden angebrachten wärmeisolierenden Isolationsschicht in der Mitte des Tankbodens. Bei der Phasenumwandlung bei - 11 Grad Celsius erfährt die wässrige Harnstofflösung eine Ausdehnung von ca 7%. Durch diesen Volumenzuwachs kann es zu einer Schädigung des Tanks kommen. Zusätzliche Abhilfe bzw. Vorsorge bietet ein örtlich gesteuertes Einfrieren des Tankinhalts, wobei davon ausgegangen wird, dass der Tank nicht vollständig gefüllt ist, d.h. oberhalb des Flüssigkeitsspiegels ist ein Luftpolster vorhanden. Durch das gezielte Anbringen des Isolationsmaterials an bestimmten Stellen des Tanks, wie hier einer Isolation 23, kann der Einfriervorgang im Tank lokal gezielt gelenkt werden. Diese Isolation kann so gewählt werden, dass das Anwachsen des Eises in bestimmte, für den Behälter unkritische Bereiche verlagert weden kann, z.B. an die Oberfläche, wo ein Luftpolster realisiert werden kann. Die Isolation 23 am Boden verändert das räumliche Einfrierverhalten, derart, dass sich in der Mitte des Tanks (siehe die eingekreiste Ziffer 5) sehr lange ein Bereich mit noch nicht gefrorener Flüssigkeit halten kann, was zum Einen dazu führt, dass die mechanischen Eiskräfte auf den Tank geringer sind, und zum Anderen, dass relativ lange auch bei tiefen Temperaturen noch ein Bereich des Tanks mit einer absaugbaren und für den Betrieb einer Abgasnachbehandlungsanordnung verwendbaren Flüssigkeit zur Verfügung steht. Die eingekreisten Ziffern 1 bis 5 geben, analog zur Darstellung in Figur 1, die Reihenfolge der Bereiche an, in der die Tankfüllung bei Unterschreiten einer Temperatur von - 11 Grad Celsius einfriert.

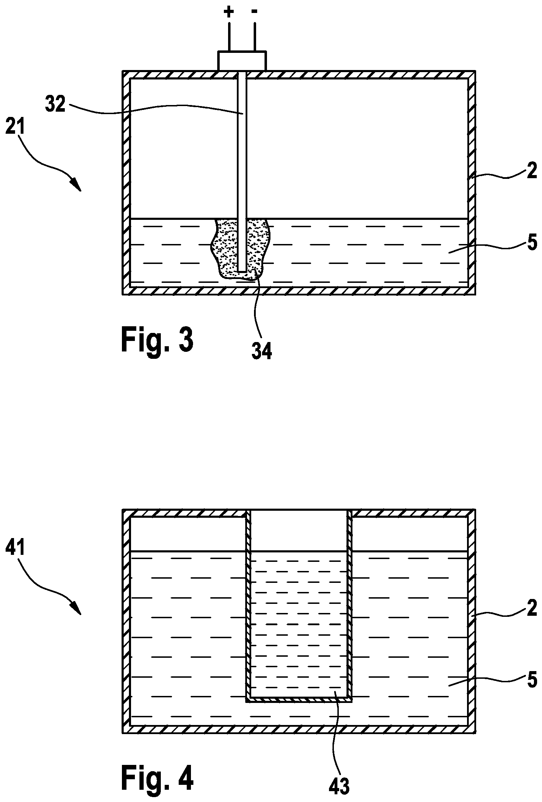

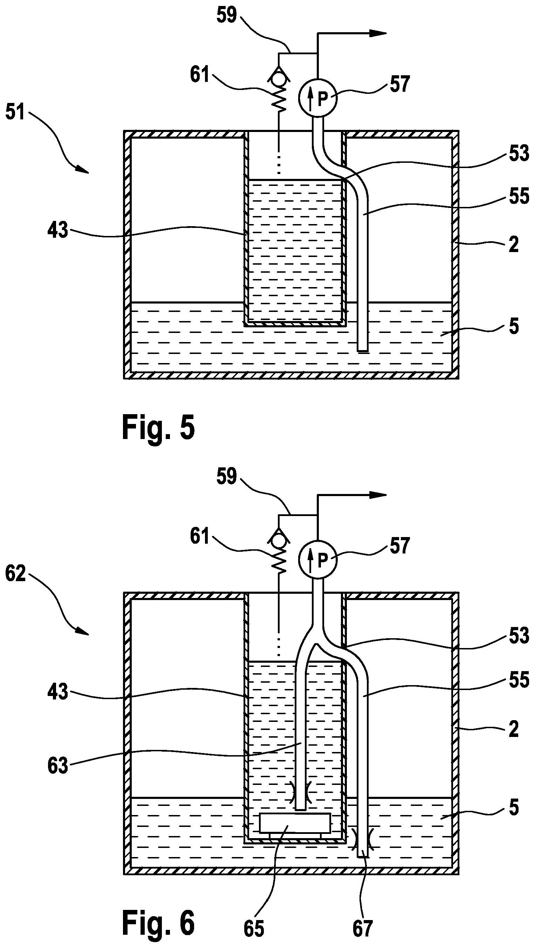

Bei einem Auftauvorgang, der beispielsweise über eine elektrische Heizung oder über mit dem Tank in Wärmekontakt stehende Leitungen zirkulierenden Motorkühlwassers erfolgt, kann die Auftauwärme durch entsprechende Anordnung der Heizmittel auf ein gezieltes Teilvolumen konzentriert werden. In Figur 3 ist ein Tank mit einem elektrischen Auftauchmechanismus, einem elektrischen Heizstab 32 samt seinen elektrischen Anschlüssen, dargestellt. Da nur eine begrenzte elektrische Leistung zur Verfügung steht, kann nur ein begrenztes Eisvolumen 34, das zudem vom Füllstand im Tank abhängt, aufgetaut werden, das allerdings in einer kurzen Zeit, so dass eine nachgeordnete Abgasnachbehandlungsanordnung bzw. die Tankanordnung bereits nach kürzester Zeit betriebsbereit ist. Bei fast leerem Tank bzw. niedrigem Füllstand wird das zum Auftauen zur Verfügung stehende Volumen sehr klein, d.h. nach geringer Fahrstrecke steht kein aufgetautes Reduktionsmittel mehr zur Verfügung, zumal die Flüssigkeit um den Heizstab abgesaugt wird und somit die Wärme über die Luft nicht mehr an das gefrorene Reduktionsmittel abgegeben werden kann.
Von Vorteil ist es, wenn ein aufzutauendes Teilvolumen gegenüber dem gesamten Tankvolumen thermisch isoliert ist. Ansonsten verteilt sich die eingebrachte Wärme auf das gefrorene Gesamtvolumen, die Auftauzeiten erhöhen sich. Bei der Konzentration auf ein kleines Teilvolumen ist das System bereits nach kürzester Zeit betriebsbereit. Entsprechend zeigt Figur 4 einen Tank 41 mit Kunststoffwand 2, der in seinem Inneren einen Topf 43 aufweist, der ein Teilvolumen vom Rest des Tanks abgrenzt. Ein hier nicht näher dargestelltes Heizelement analog zum Heizelement, das in Figur 3 dargestellt ist, kann in diesem Teilvolumen oder an der Topfwand, insbesondere an der Innenseite der Topfwand, angeordnet sein, um gezielt das Teilvolumen zu erwärmen bzw. aufzutauen. Der Topf wird vorzugsweise in der Mitte des Tanks positioniert. Dies ist vorteilhaft, da die Flüssigkeit zunächst im wandnahen Bereich gefriert und dann erst in der Mitte gefriert. Da es relativ lange dauert, bis letztendlich auch die Tankmitte gefroren ist, muss bei einem in der Tankmitte positionierten Topf nur selten die Heizung eingeschaltet werden, obgleich die Außentemperatur tiefer als -11° C ist. Ein solcher Topf kann auch einen Überlauf aufweisen, wie nachfolgend beispielsweise in der Figur 5 gezeigt.
Figur 5 zeigt eine Tankanordnung bzw. einen Tank 51, dessen darin (in der Tankmitte) angeordneter Topf 43 einen Überlauf 53 aufweist. Der Topf 43 soll in der Ausführungsform nach Figur 5 stets völlig gefüllt sein. Diese permanente Füllung des Topfes wird dadurch gewährleistet, dass von einer in einem Fördermodul untergebrachten Pumpe 57 von außerhalb des Topfes, d.h. vom "restlichen" Tank, die Flüssigkeit über eine Leitung 55 zur nicht näher dargestellten nachgeordnete Abgasnachbehandlungsanordnung gepumpt wird. Die mechanische Druckregelung des Systems erfolgt über einen mechanisches Druckregelventil 61. Dieses ist im Fördermodul untergebracht, wobei die Überströmmenge dieses Druckreglers über die Rücklaufleitung 59 in den Topf 43 fließt. Dadurch ist der Topf immer maximal befüllt, erst eine überschüssige Menge verlässt den Topf 43 über den Überlauf 53 in Richtung äußerer Tankbereich. Bei tiefen Temperaturen wird nun zunächst das im Topf vorliegende Eis mittels eines nicht näher dargestellten, im Bereich des Topfs angeordneten elektrischen Heizelements vorzugsweise vollständig aufgetaut. Das Eis im Resttank wird zunächst nicht aufgetaut. Auch dieser Topf 43 besteht aus Kunststoff und bildet somit eine Isolierschicht zwischen dem aufzutauendem Topf und dem gefrorenen Gesamtvolumen.

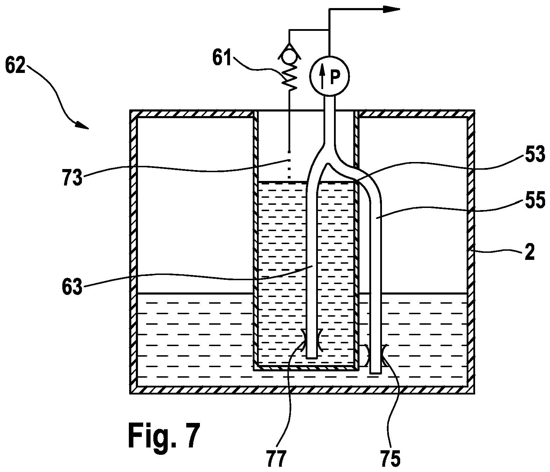

Figur 6 zeigt eine erfindungsgemäße Tankanordnung 62, die zusätzlich eine Topfleitung 63 innerhalb des Topfs 43 aufweist. Diese Topfleitung verbindet sich unmittelbar vor dem Fördermodul oberhalb des Überlaufs 53 mit der Leitung 55 und kann aus dem Topf ansaugen und die nachgeordnete Abgasnachbehandlungsanordnung mit Reduktionsmittel versorgen. Wenn also die in den Tank mündende Leitung 55 an ihrer Saugöffnung 67 durch den gefrorenen Resttank verschlossen ist, wird durch die im Topf befindliche und bereits aufgetaute Topfleitung 63 aus dem Topf das aufgetaute Reduktionsmittel angesaugt. Der Tank 62 weist hierbei eine im Bodenbereich des Topfs 43 angeordnete elektrische Heizung 65 auf. Unter dem Fördermodul wird die Summe folgender Komponenten verstanden: Pumpe 57, Druckregelventil 61, wahlweise zusätzlich eingeschlossen die Rücklaufleitung 59, die Leitung 55 und Topfleitung 63.
Es ist vorteilhaft, wenn der Topf 43 stets gefüllt ist, so dass kurz nach dem Auftauen des Topfes immer eine ausreichende Menge an absaugbarem Reduktionsmittel zur Verfügung steht. Das Prinzip des stetig gefüllten Topfes erfüllt sich, wenn im aufgetauten Zustand (Topf und Resttank) gleichzeitig über die Leitungen 55 und 63 sowohl aus dem Topf als auch aus dem Resttank angesaugt wird. In der Anordnung gemäß Figur 7 wird dies über entsprechende Drosseln in den Leitungen 55 und 63 dargestellt: die Leitung 55 weist eine erste Drossel 75 auf, die Topfleitung 63 eine zweite Drossel 77. Dabei ist zu berücksichtigen, dass die aus dem Resttank abgesaugte Flüssigkeit stets größer ist als die in den Abgastrakt einzudüsende Menge. Über den Rücklauf des Druckreglers 61 ist somit ein permanent gefüllter Topf 43 gewährleistet. Über den Überlauf 53 des Topfs 43 kann überschüssiges Reduktionsmittel gegebenenfalls in den äußeren Tankbereich zurückgeführt werden (Rücklaufmenge 73).

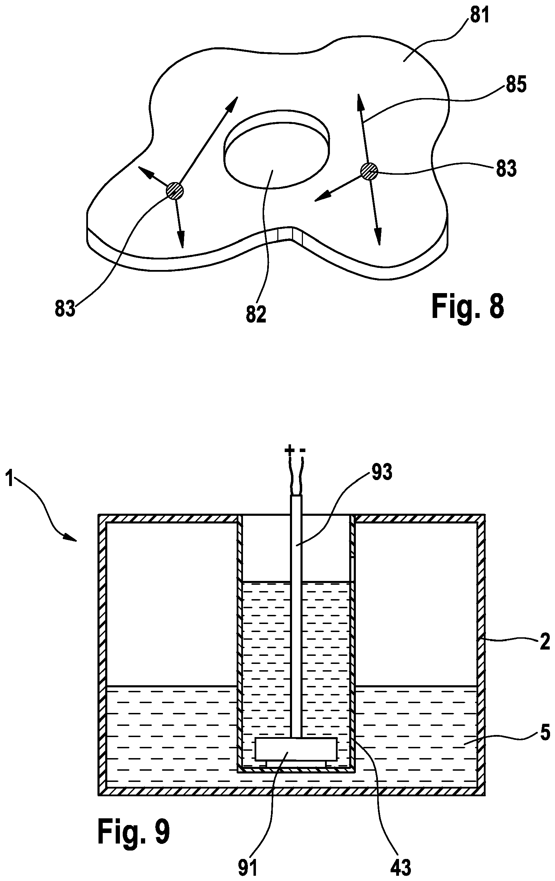

Figur 8 zeigt eine Ausführungsform einer Heizung 65 in Form eines flächigen Aluminiumkörpers 81, in dem einer oder mehrere punktförmige Heizelemente 83, beispielsweise bei hohen Temperaturen sich selbst abregelnde PTC-Heizelemente ("PTC" = Positive Temperature Coefficient), integriert sind. Die punktförmigen Heizelemente geben die Wärme im Bereich des Topfs an den flächigen Aluminiumkörper ab; die Richtung des Wärmeflusses ist hierbei mit Pfeilen 85 markiert. Aufgrund der guten Wärmeleitfähigkeit ist Aluminium vorteilhaft. Das Loch 82 in der Mitte des Aluminumkörpers dient zur Befestigung des Körpers an eine Halterung.

Figur 9 zeigt eine mögliche Anordnung einer Heizung 91 in Form des flächigen Aluminiumkörpers 81, der mit Kunststoff umspritzt ist. Mittels der stabförmigen Halterung 93, in die die Stromzuführung 93 integriert ist, ist diese flächige Heizkonstruktion mit integrierten PTC-Heizelementen im Topf bodennah angebracht. Die Kunststoffumspritzung dient zum Schutz der PTC-Heizelemente bzw. des Aluminiumkörpers vor der wässrigen Harnstofflösung.

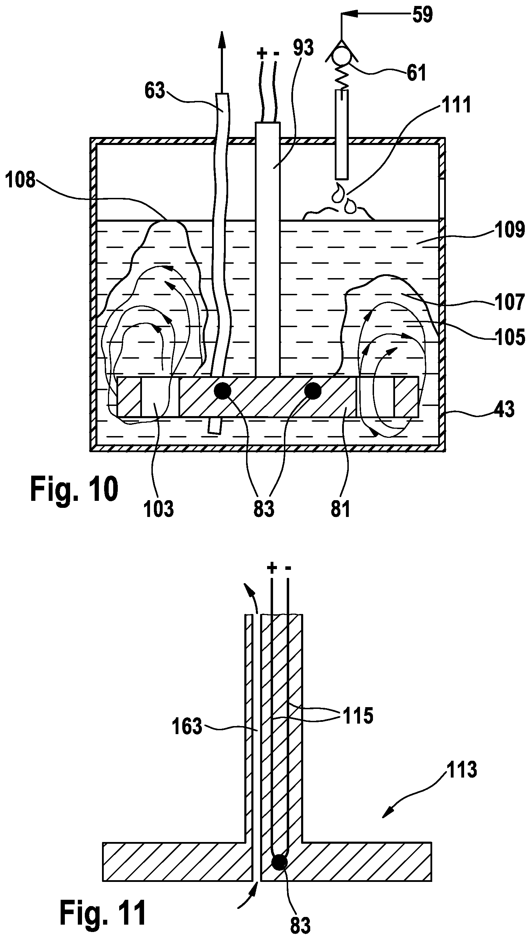

Figur 10 zeigt die Anordnung einer Heizung in einem Topf 43, bei der der flächige, mit Kunststoff umspritzte Aluminiumkörper 81 randständige Konvektionsbohrungen 103 aufweist, die bodennahe, unterhalb des Aluminiumkörpers gelegene Reduktionsmittelbereiche mit oberhalb des Aluminiumkörpers gelegenen Bereichen verbinden. Diese Heizung baut auf der Konvektion auf, wobei um die Konvektionsbohrungen herum eine Konvektionsströmung, ein Strömungskreislauf 105, entsteht. Die räumliche Anordnung der Heizung bewirkt, dass zunächst um den Heizkörper herum aufgetaut wird. Über eine nach oben gerichtete Konvektionsströmung wird die Wärme im bereits aufgetauten Medium kontinuierlich nach oben transportiert. Dort abgekühlt fällt sie wieder nach unten zur Heizung. Es entsteht somit ein Strömungskreislauf von der Heizung nach oben, insbesondere im Bereich der im Aluminium angebrachten Konvektionsbohrungen. Nach einer gewissen Zeit erreicht die auftauende Wärmeströmung die Eisoberfläche. Somit ist das Teilvolumen im Topf teilweise aufgetaut (aufgetauter Bereich 107, (noch) gefrorener Bereich 109). Wenn nun zwischen der Ansaugstelle der Topfleitung 63 und der Luft über der aufgetauten Flüssigkeit eine Verbindung geschaffen ist (bis zur Eisoberfläche bzw. bis zum Luftpolster aufgeschmolzener Bereich 108), kann nunmehr das System in Betrieb gehen, sobald die ansaugende Topfleitung 63 ebenfalls aufgetaut ist. Das im Teilvolumen noch vorhandene Eisvolumen, bevorzugt an der Oberfläche, wird nunmehr auch durch das über das Druckregelventil zurückfließende warme Medium 111 zusätzlich aufgetaut. Dieses warme Medium fällt auf die an der Oberfläche verbleibenden Eisreste und unterstützt somit den Auftauvorgang.

Figur 11 zeigt ein Beispiel einer innerhalb eines Topfes verwendbaren Heizung 113 mit einem beispielsweise einstückig mit dem flächigen Aluminiumkörper verbundenen Haltelement, in dem eine Topfleitung 163 zum Absaugen des Reduktionsmittels aus dem Topf integriert ist. Parallel zur Topfleitung 163 verlaufen die elektrischen Versorgungsleitungen 115, die eines oder mehrere PTC-Heizelemente 83 mit elektrischem Strom versorgen. Dabei ist das Haltelement mit der integrierten Topfleitung 63 mit bodennaher Ansaugstelle ebenos in Kunststoff eingespritzt (nicht näher dargestellt) wie der flächige Aluminiumkörper. Die Topfleitung 63 führt über den Topf in das Fördermodul. Die elektrische Zuleitung (Versorgungsleitungen 115) zum PTC wird als Widerstandsdraht ausgeführt. Sie verläuft in unmittelbarer Nähe der Topfleitung 163. Somit kann die Topfleitung 163 über die im Widerstandsdraht erzeugte Wärme rechtzeitig aufgetaut werden. So hat das System die im Topf vorhandene Flüssigkeitsmenge zur Realisierung des Betriebs in kürzester Zeit zur Verfügung. Somit kann nach kürzester Zeit der Betrieb des Systems gewährleistet werden. Mit einer vorhandenen aufgetauten Menge kann somit beispielsweise eine Strecke von ca. 500 bis 1000 km zurückgelegt werden. Es wird davon ausgegangen, dass nach dieser Zeit durch die Umgebung weitere wässrige Harnstofflösung im Gesamttank aufgetaut wird, die dann teilweise über die Leitung 55 angesaugt wird.

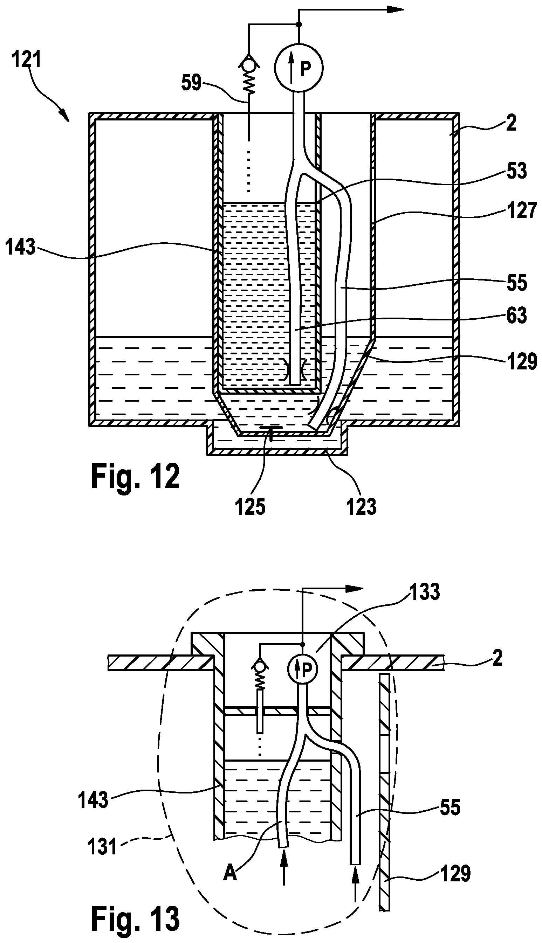

Figur 12 zeigt eine weitere Tankanordnung 121, bei der um den Topf 143 herum ein weiterer Behälter 129 angeordnet ist. Dieser hat im Bodenbereich einen Sumpf 123, also eine Vertiefung, mit einem Schirmventil 125 im untersten Bereich. Dieser Behälter 129 hat einen Überlauf 127 zum Tank. Über den hydrostatischen Druck dringt die Flüssigkeit durch das Schirmventil 125 in den Behälter. Von dort wird die Flüssigkeit über die Leitung 55 in den Topf gesaugt. Die Rücklaufmenge füllt somit zunächst den inneren Topf. Über dessen Überlauf 53 gelangt die Flüssigkeit in den Behälter 129. Ist dieser gefüllt, so gelangt die Flüssigkeit über den Überlauf 127 in den Tank zurück. Überlauf 53 liegt oberhalb Überlauf 127. Überlauf 127 bewirkt also, dass der Behälter 129 einen höheren Flüssigkeitsstand als der Resttank hat. Somit ist die aus dem Behälter absaugende Leitung 55 stets weit unter der Flüssigkeitsoberfläche. Diese Konstruktion "Topf in Behälter, Behälter in Tank" macht den Tank unempfindlich gegen Schwappen, Eisschlagen, Ansaugen von Luft und Geräusche durch Schwappen und Eisschlagen. Die Anordnung von "Topf in Behälter" in der Mitte des Tanks wirkt sich ausserdem vorteilhaft bei Schwappbewegungen und Eisschlagen aus. Die im Tank gefrorene Flüssigkeit bildet einen gefrorenen Ring, der mittig durch den Behälter gefangen ist und somit nur eingeschränkte Bewegungsfreiheit hat.
Figur 13 zeigt eine Ausführungsform, bei der das Fördermodul 133 vertieft auf den Topf 143 aufgesetzt wird. So können ohne zusätzliche Leitungen und Verbindungsstellen auf direktem Wege Fördermodul und Tank verbunden werden. Das Fördermodul wird ferner auf dem Tank in einer nicht näher dargestellten Vertiefung der Tankwand positioniert. Somit ist gewährleistet, dass geringe Leckagen nicht entlang der Tankoberfläche in die Umgebung gelangen bzw erst gar nicht zutage treten, da sie in der Vertiefung verdeckt bzw. gefangen sind. Somit gelangt die Leckage nicht in das Fahrzeug und kann leicht aus der Vertiefung entfernt werden. Der Topf mit Heizung, der Behälter mit Schirmventil sowie das Fördermodul bilden eine Funktionseinheit 131, die nahezu unabhängig vom Tank ist und als Gesamtes aus dem Tank demontiert werden kann. Diese Funktionseinheit kann wahlweise auch mit entsprechenden Sensoren für Flüssigkeitsstand, Temperatur oder Qualität des Reduktionsmittels ausgeführt werden. Das Fördermodul kann mit einem Verschlussdeckel bündig zum Tank abgedeckt werden. Die Tankkonstruktion ist so ausgeführt, dass alle Wärmequellen (Tankheizung, nicht näher dargestellt Heizung des Fördermoduls, Pumpenmotor usw.) in der Funktionseinheit konzentriert sind und somit gemeinsam zum Auftauen in einem Kernbereich des Tanks zur Gewährleistung einer nur kurzen Aufwärmperiode beitragen.

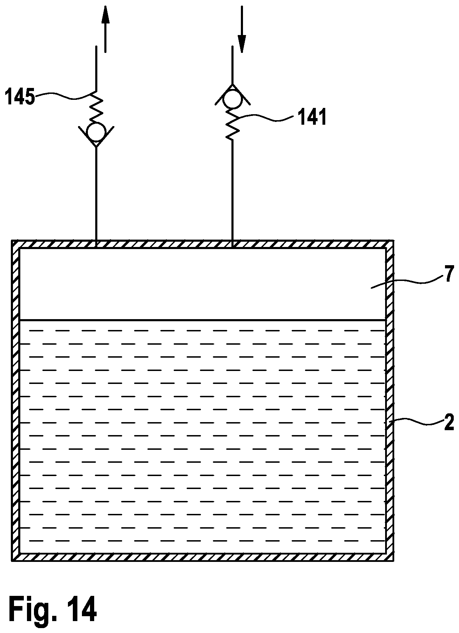

Figur 14 zeigt schematisch einen Tank mit Tankwand 2 ohne nähere Darstellung der weiteren Komponenten wie Topf, Fördermodul etc. Der Tankinhalt kann aufgrund von Entnahme, Temperaturschwankungen sowie Zersetzen der wässrigen Hamstoffiösung unterschiedliche Drücke im Tank im Bereich des Luftpolsters 7 aufbauen. Über Be- und Entlüftungsventile 141 bzw. 145 in die Umgebung wird diesen Druckschwankungen Rechnung getragen. Da beim Entlüften die Gefahr besteht, dass Ammoniak in die Umgebung entweicht und zur Geruchsbelästigung führt, wird der Entlüftungsvorgang nur bei höheren Tankinnendrücken vollzogen, d.h. der Tank ist vorteilhafterweise so aufgebaut, dass er moderate Innendrücke ohne unzulässige Formänderung aufnehmen kann. Ggf. kann ein Aktivkohlefilter vorgesehen sein, über den beim Entlüften das ammoniakhaltige Gas geführt werden kann.

## Patentansprüche

1. Tankanordnung (62; 121) umfassend einen Tank (1; 21; 41; 51) für ein flüssiges,
beispielsweise wässriges, Reduktionsmittel, insbesondere für eine Harnstofflösung zur Reduktion von Stickoxyden im Abgas von Brennkraftmaschinen,
wobei die Tankanordnung (62; 121) einen innerhalb des Tanks (1; 21; 41; 51) angeordneten Innenbehälter (43) zur Aufnahme eines Teilvolumens an Reduktionsmittel aufweist, wobei der Innenbehälter (43) den Tank (1; 21; 41; 51) in einen Teiltank und einen Resttank unterteilt,
wobei im Innenbehälter (43) eine elektrische Heizung (32, 65, 81, 83, 91, 93, 113) zum Beheizen des Reduktionsmittels im Innenbehälter (43) angeordnet ist, wobei der Tank (1; 21; 41; 51) eine Behälterwand (2) aufweist, die aus Kunststoff hergestellt ist, **dadurch gekennzeichnet, dass** sich im Resttank eine erste Saugleitung (55) und im Innenbehälter (43) eine zweite Saugleitung (63, 163) befinden, die zu wenigstens einer Pumpe (57) der Tankanordnung (62; 121) führen,
dass stromab der wenigstens einen Pumpe (57) ein Druckregelventil (61) angeordnet ist, das überschüssiges Reduktionsmittel zum Innenbehälter (43) ableitet, und
dass der Innenbehälter einen Überlauf (53) zum Resttank aufweist.

2. Tankanordnung nach Anspruch 1, **dadurch gekennzeichnet, dass** der Tank (1; 21; 41; 51) im Blasverfahren hergestellt ist.

3. Tankanordnung nach Anspruch 1 oder 2, **dadurch gekennzeichnet, dass** die Behälterwand (2) aus mehreren Werkstoffschichten (11, 13, 15) besteht, von denen wenigstens eine als Sperrschicht (15) ausgebildet ist.

4. Tankanordnung nach Anspruch 3, **dadurch gekennzeichnet, dass** das Reduktionsmittel insbesondere eine wässrige Harnstofflösung ist und zumindest mittelbar Ammoniak enthält und die Sperrschicht (15) die Diffusion von Ammoniak durch die Behälterwand verhindert.

5. Tankanordnung nach einem der vorhergehenden Ansprüche, **dadurch gekennzeichnet, dass** die Behälterwand (2) mit einer Wärmeisolation (23) versehen ist, die an bestimmten Stellen eine gegenüber anderen Stellen stärkere Isolationswirkung bewirkt, indem die Wärmeisolation die Behälterwand (2) beispielsweise nur teilweise bedeckt.

6. Tankanordnung nach Anspruch 1, **dadurch gekennzeichnet, dass** der Innenbehälter (43) topfförmig und aus Kunststoff ausgebildet ist.

7. Tankanordnung nach Anspruch 6, **dadurch gekennzeichnet, dass** der Innenbehältet (43) im Wesentlichen mittig im Tank (1; 21; 41; 51) mit Abstand zur Behälterwand (2) angeordnet ist.

8. Tankanordnung nach einem der vorhergehenden Ansprüche, **dadurch gekennzeichnet, dass** um den Innenbehälter (43) ein Schwappbehälter (129) angeordnet ist, der an seiner tiefsten Stelle eine Öffnung zum Tank (1; 21; 41; 51) aufweist.

9. Tankanordnung nach Anspruch 8, **dadurch gekennzeichnet, dass** in der Öffnung ein Schirmventil (125) angeordnet ist, das bei hohem Flüssigkeitsstand im Tank (1; 21; 41; 51) durch den hydrostatischen Druck des Reduktionsmittels im Tank (1; 21; 41; 51) (1; 21; 41; 51) geöffnet wird und das bei niedrigem Flüssigkeitsstand im Tank (1; 21; 41; 51) die Öffnung zum Tank (1; 21; 41; 51) verschließt.

10. Tankanordnung nach Anspruch 9, **dadurch gekennzeichnet, dass** das Schirmventil (25) im Bereich der tiefsten Stelle (123) im Schwappbehälter (129) angeordnet ist.

11. Tankanordnung nach einem der vorhergehenden Ansprüche , **dadurch gekennzeichnet, dass** die elektrische Heizung mehrere sich selbst abregelnde Heizelemente (83) aufweist, beispielsweise PTC-Heizelemente.

12. Tankanordnung nach Anspruch 11, **dadurch gekennzeichnet, dass** die Heizelemente (83) auf einem Aluminiumkörper (81) angeordnet sind.

13. Tankanordnung nach Anspruch 12, **dadurch gekennzeichnet, dass** der Aluminiumkörper (81) plattenförmig ausgebildet ist, horizontal im Innenbehälter (43) angeordnet ist und quer zu seiner Längsachse mindestens eine Durchgangsöffnung (103) hat.

14. Tankanordnung nach Anspruch 13, **dadurch gekennzeichnet, dass** der Querschnitt der ersten Saugleitung (55) so dimensioniert ist, dass über die erste Saugleitung (55) mehr Reduktionsmittel ansaugbar ist, als zur Reduktion des Abgases maximal benötigt wird.

15. Tankanordnung nach Anspruch 14, **dadurch gekennzeichnet, dass** die Saugleitungen (55, 63) jeweils zumindest eine Drossel (75, 77) enthalten, wobei eine erste Drossel (75) der ersten Saugleitung (55) einen größeren Strömungsquerschnitt hat als eine zweite Drossel (77) der zweiten Saugleitung (63, 163).

16. Tankanordnung nach einem der vorhergehenden Ansprüche, **dadurch gekennzeichnet, dass** in der Nähe der zweiten Saugleitung (163) eine elektrische Leitung (115) angeordnet ist.

17. Tankanordnung nach Anspruch 16, **dadurch gekennzeichnet, dass** die elektrische Leitung als Widerstandsdraht in einer als Heizstab ausgebildeten Halterung ausgebildet ist.

18. Tankanordnung nach einem der vorhergehenden Ansprüche, **dadurch gekennzeichnet, dass** Pumpe (57) und Druckregelventil (61) zu einem Fördermodul zusammengesetzt sind, das am Innenbehälter und/oder am Tank (1; 21; 41; 51) befestigt ist.

19. Tankanordnung nach Anspruch 18, **dadurch gekennzeichnet, dass** der Innenbehälter (43) mit dem Fördermodul (133) eine Funktionseinheit (131) bildet, die als Ganzes aus dem Tank (1; 21; 41; 51) demontierbar ist und eine Öffnung im Tank (1; 21; 41; 51) deckelartig verschließt.

20. Tankanordnung nach einem der vorhergehenden Ansprüche, **dadurch gekennzeichnet, dass** der Tank (1; 21; 41; 51) nach außen be- und entlüftet (141, 145) ist.

21. Tankanordnung nach Anspruch 20, **dadurch gekennzeichnet, dass** die Entlüftung über ein Aktivkohlefilter erfolgt.

## Claims

1. Tank arrangement (62; 121) comprising a tank (1; 21; 41; 51) for a liquid (for example, aqueous) reducing agent, in particular for a urea solution for the reduction of nitrogen oxides in the exhaust gas of internal combustion engines, the tank arrangement (62; 121) having an inner container (43) which is arranged within the tank (1; 21; 41; 51) for receiving a part volume of reducing agent, the inner container (43) dividing the tank (1; 21; 41; 51) into a part tank and a remaining tank, an electric heater (32, 65, 81, 83, 91, 93, 113) being arranged in the inner container (43) for heating the reducing agent in the inner container (43), the tank (1; 21; 41; 51) having a container wall (2) which is produced from plastic, **characterized in that** a first suction line (55) is situated in the remaining tank and a second suction line (63, 163) is situated in the inner container (43), which suction lines lead to at least one pump (57) of the tank arrangement (62; 121), **in that** a pressure control valve (61) which discharges excess reducing agent to the inner container (43) is arranged downstream of the at least one pump (57), and **in that** the inner container has a level drain (53) to the remaining tank.

2. Tank arrangement according to Claim 1, **characterized in that** the tank (1; 21; 41; 51) is produced using the blow moulding method.

3. Tank arrangement according to Claim 1 or 2, **characterized in that** the container wall (2) consists of a plurality of material layers (11, 13, 15), of which at least one is configured as a barrier layer (15).

4. Tank arrangement according to Claim 3, **characterized in that** the reducing agent is, in particular, an aqueous urea solution and at least indirectly comprises ammonia, and the barrier layer (15) prevents the diffusion of ammonia through the container wall.

5. Tank arrangement according to one of the preceding claims, **characterized in that** the container wall (2) is provided with a thermal insulation means (23) which brings about a more pronounced insulation effect at certain locations in comparison with other locations, by the thermal insulation means covering the container wall (2) only partially, for example.

6. Tank arrangement according to Claim 1, **characterized in that** the inner container (43) is of pot-shaped and plastic configuration.

7. Tank arrangement according to Claim 6, **characterized in that** the inner container (43) is arranged substantially centrally in the tank (1; 21; 41; 51) at a spacing from the container wall (2).

8. Tank arrangement according to one of the preceding claims, **characterized in that** a baffle container (129) is arranged around the inner container (43), which baffle container (129) has an opening to the tank (1; 21; 41; 51) at its lowest point.

9. Tank arrangement according to Claim 8, **characterized in that** a screen valve (125) is arranged in the opening, which screen valve (125), in the case of a high liquid level in the tank (1; 21; 41; 51), is opened by way of the hydrostatic pressure of the reducing agent in the tank (1; 21; 41; 51) and, in the case of a low liquid level in the tank (1; 21; 41; 51), closes the opening to the tank (1; 21; 41; 51).

10. Tank arrangement according to Claim 9, **characterized in that** the screen valve (25) is arranged in the baffle container (129) in the region of the lowest point (123).

11. Tank arrangement according to one of the preceding claims, **characterized in that** the electric heater has a plurality of self-governing heating elements (83), for example PTC heating elements.

12. Tank arrangement according to Claim 11, **characterized in that** the heating elements (83) are arranged on an aluminium body (81).

13. Tank arrangement according to Claim 12, **characterized in that** the aluminium body (81) is of plate-shaped configuration, is arranged horizontally in the inner container (43), and has at least one passage opening (103) transversely with respect to its longitudinal axis.

14. Tank arrangement according to Claim 13, **characterized in that** the cross section of the first suction line (55) is dimensioned in such a way that more reducing agent can be sucked in via the first suction line (55) than is required at most for the reduction of the exhaust gas.

15. Tank arrangement according to Claim 14, **characterized in that** the suction lines (55, 63) contain in each case at least one throttle (75, 77), a first throttle (75) of the first suction line (55) having a greater flow cross section than a second throttle (77) of the second suction line (63, 163).

16. Tank arrangement according to one of the preceding claims, **characterized in that** an electric line (115) is arranged in the vicinity of the second suction line (163).

17. Tank arrangement according to Claim 16, **characterized in that** the electric line is configured as a resistance wire in a holder which is configured as a heating rod.

18. Tank arrangement according to one of the preceding claims, **characterized in that** the pump (57) and the pressure control valve (61) are combined to form a delivery module which is fastened to the inner container and/or to the tank (1; 21; 41; 51).

19. Tank arrangement according to Claim 18, **characterized in that**, with the delivery module (133), the inner container (43) forms a functional unit (131) which can be dismantled as one unit from the tank (1; 21; 41; 51) and closes an opening in the tank (1; 21; 41; 51) in a lid-like manner.

20. Tank arrangement according to one of the preceding claims, **characterized in that** the tank (1; 21; 41; 51) is aerated and ventilated (141, 145) to the outside.

21. Tank arrangement according to Claim 20, **characterized in that** the ventilating takes place via an activated charcoal filter.

## Revendications

1. Agencement de réservoir (62; 121) comprenant un réservoir (1; 21; 41; 51) pour un agent réducteur liquide, par exemple aqueux, en particulier pour une solution d'urée destinée à la réduction d'oxydes d'azote dans les gaz d'échappement de moteurs à combustion interne, dans lequel l'agencement de réservoir (62; 121) présente un réservoir intérieur (43) disposé à l'intérieur du réservoir (1; 21; 41; 51) et destiné à contenir un volume partiel d'agent réducteur, dans lequel le réservoir intérieur (43) divise le réservoir (1; 21; 41; 51) en un réservoir partiel et un réservoir résiduel, dans lequel un chauffage électrique (32, 65, 81, 83, 91, 93, 113) est disposé dans le réservoir intérieur (43) pour le chauffage de l'agent réducteur dans le réservoir intérieur (43), dans lequel le réservoir (1; 21; 41; 51) présente une paroi de réservoir (2), qui est fabriquée en matière plastique,
**caractérisé en ce qu'**il se trouve dans le réservoir résiduel une première conduite d'aspiration (55) et dans le réservoir intérieur (43) une seconde conduite d'aspiration (63, 163), qui conduisent à au moins une pompe (57) de l'agencement de réservoir (62; 121), **en ce qu'**une soupape de réglage de pression (61) est disposée en aval de ladite au moins une pompe (57), qui dévie l'agent réducteur excédentaire vers le réservoir intérieur (43), et **en ce que** le réservoir intérieur présente un trop-plein (53) vers le réservoir résiduel.

2. Agencement de réservoir selon la revendication 1, **caractérisé en ce que** le réservoir (1; 21; 41; 51) est fabriqué par un procédé de soufflage.

3. Agencement de réservoir selon la revendication 1 ou 2, **caractérisé en ce que** la paroi de réservoir (2) se compose de plusieurs couches de matériaux (11, 13, 15), dont au moins une forme une couche de barrière (15).

4. Agencement de réservoir selon la revendication 3, **caractérisé en ce que** l'agent réducteur est en particulier une solution aqueuse d'urée et contient au moins indirectement de l'ammoniac, et la couche de barrière (15) empêche la diffusion d'ammoniac à travers la paroi de réservoir.

5. Agencement de réservoir selon l'une quelconque des revendications précédentes, **caractérisé en ce que** la paroi de réservoir (2) est munie d'une isolation thermique (23), qui assure à des endroits déterminés un effet d'isolation plus important qu'à d'autres endroits, du fait que l'isolation thermique ne recouvre par exemple que partiellement la paroi de réservoir (2).

6. Agencement de réservoir selon la revendication 1, **caractérisé en ce que** le réservoir intérieur (43) est réalisé en forme de pot et en matière plastique.

7. Agencement de réservoir selon la revendication 6, **caractérisé en ce que** le réservoir intérieur (43) est disposé essentiellement au milieu dans le réservoir (1; 21; 41; 51) à distance de la paroi de réservoir (2).

8. Agencement de réservoir selon l'une quelconque des revendications précédentes, **caractérisé en ce qu'**un réservoir à débordement (129) est disposé autour du réservoir intérieur (43), et présente à son point le plus profond une ouverture vers le réservoir (1; 21; 41; 51).

9. Agencement de réservoir selon la revendication 8, **caractérisé en ce qu'**une soupape en parapluie (125) est disposée dans l'ouverture, est ouverte par la pression hydrostatique de l'agent réducteur dans le réservoir (1; 21; 41; 51) (1 ; 21 ; 41 ; 51) pour un haut niveau de liquide dans le réservoir (1; 21; 41; 51) et ferme l'ouverture vers le réservoir (1; 21; 41; 51) pour un bas niveau de liquide dans le réservoir (1; 21; 41; 51).

10. Agencement de réservoir selon la revendication 9, **caractérisé en ce que** la soupape en parapluie (25) est disposée dans la région du point le plus profond (123) dans le réservoir à débordement (129).

11. Agencement de réservoir selon l'une quelconque des revendications précédentes, **caractérisé en ce que** le chauffage électrique présente plusieurs éléments chauffants à régulation automatique (83), par exemple des éléments chauffants PTC.

12. Agencement de réservoir selon la revendication 11, **caractérisé en ce que** les éléments chauffants (83) sont disposés sur un corps en aluminium (81).

13. Agencement de réservoir selon la revendication 12, **caractérisé en ce que** le corps en aluminium (81) est réalisé en forme de plaque, est disposé horizontalement dans le réservoir intérieur (43) et a au moins une ouverture de passage (103) transversalement à son axe longitudinal.

14. Agencement de réservoir selon la revendication 13, **caractérisé en ce que** la section transversale de la première conduite d'aspiration (55) est dimensionnée de telle manière que l'on puisse aspirer par la première conduite d'aspiration (55) plus d'agent réducteur que ce qui est nécessaire au maximum pour la réduction des gaz d'échappement.

15. Agencement de réservoir selon la revendication 14, **caractérisé en ce que** les conduites d'aspiration (55, 63) comportent respectivement au moins un étranglement (75, 77), dans lequel un premier étranglement (75) de la première conduite d'aspiration (55) présente une plus grande section d'écoulement qu'un deuxième étranglement (77) de la deuxième conduite d'aspiration (63, 163).

16. Agencement de réservoir selon l'une quelconque des revendications précédentes, **caractérisé en ce qu'**une ligne électrique (115) est disposée à proximité de la deuxième conduite d'aspiration (163).

17. Agencement de réservoir selon la revendication 16, **caractérisé en ce que** la ligne électrique est formée par un fil de résistance dans un support formé par une barre chauffante.

18. Agencement de réservoir selon l'une quelconque des revendications précédentes, **caractérisé en ce que** la pompe (57) et la soupape de réglage de pression (61) sont réunies en un module de transport, qui est fixé au réservoir intérieur et/ou au réservoir (1; 21; 41; 51).

19. Agencement de réservoir selon la revendication 18, **caractérisé en ce que** le réservoir intérieur (43) forme avec le module de transport (133) une unité fonctionnelle (131), qui peut être en bloc démontée du réservoir (1; 21; 41; 51) et ferme à la manière d'un couvercle une ouverture vers le réservoir (1; 21; 41; 51).

20. Agencement de réservoir selon l'une quelconque des revendications précédentes, **caractérisé en ce que** le réservoir (1; 21; 41; 51) est aéré et ventilé vers l'extérieur (141, 145).

21. Agencement de réservoir selon la revendication 20, **caractérisé en ce que** la ventilation est effectuée au moyen d'un filtre à charbon actif.
